# EUROPEAN PATENT APPLICATION

(11) **EP 2 129 126 A1**
(43) Date of publication of application: **02.12.2009**
(21) Application number: 09251199.7
(22) Date of filing: 28.04.2009
(51) Int. Cl.: H04N 7/24

(54) **Transmission apparatus, transmission method, and reception apparatus**

(30) Priority: 30.05.2008 JP 2008142724
(71) Applicant: Sony Corporation, Tokyo (JP)
(72) Inventor: Michinari, Kohno, Tokyo (JP)
(74) Representative: DeVile, Jonathan Mark

(57) **Abstract**

A transmission apparatus includes a transmission section, a communication section and a buffer memory which is arranged to store first image data and second image data having a higher resolution than the first image data as image data to be transmitted. The transmission section transmits either the first image data or the second image data as streaming data. The communication section receives from a reception terminal device a control message representing a network situation and a level of a load imposed on a processing device performing upscaling in the reception terminal device. The control section transmits the first image data when the message denotes the network situation is bad, transmits either the first image data or second image data when it denotes the network situation is good, and controls the reception terminal device not to perform the upscaling when it denotes the network situation is good and the level of the load imposed on the processing device is high.

## Description

### Field of the Invention

The present invention relates to a transmission apparatus, a transmission method, and a reception apparatus for use in a communication system to which a transmission apparatus and a reception terminal device are connected through for example an IP communication network.

### Description of the Related Art

In recent years, as Internet data transfer systems, stream transfer services are being increasingly used in addition to download transfer systems that have become common. In a download transfer system, video files and audio files as data files are temporarily downloaded from a delivery server to a reception terminal device and then the files are reproduced. Thus, in this system, until files have been completely transferred, they are difficult to be reproduced. As a result, this system is not suitable for a long-time reproduction, a real-time reproduction, and so forth. In the stream transfer system, while data are being transferred from a transmission side to a reception terminal device, since the received data can be reproduced, the stream transfer system has been used for Internet services such as Internet telephones, remote TV conferences, video-on-demand services, and so forth.

As such a stream transfer type Internet technique, Realtime Transport Protocol (RTP) established in the Internet Engineering Task Force Request For Comments (IETF RFC) 1889 is known. When data are transferred according to RTP, time information is added as time stamps to packets. Time stamps allow chronological relationship between the transmission side and the reception side to be obtained. As a result, packets can be synchronously reproduced without influence of their delay variations (jitters).

However, RTP does not assure real time data transfer. Since priority, designation, management, and so forth of packet deliveries are not included in transport services provided by RTP, like other types of packets, RTP packets have a risk in which a delivery delay and a packet loss occur. In particular, when errors occur more than once per 10⁵ in a wired region and more than once per 10³ in a radio region, if packets are transferred according to RTP, since their reliability deteriorates, it is difficult to maintain the quality of a delivery medium.

From this point of view, a technique of detecting lost packets using sequence numbers of RTP packets, transmitting a retransmission request to the transmission side using Auto Repeat Request (ARQ), and causing the transmission side to retransmit the lost packets may be used. Instead, a technique of issuing a retransmission request and causing the transmission side to retransmit lost packets according to Transmission Control Protocol (TCP), which has high reliability is known. However, although TCP has an error resistance, it has a low throughput and a large delay. Thus, even if lost packets are retransmitted, they may not be reproduced in time.

In addition, Forward Error Correction (FEC), an error correction technique, is also known. In this technique, FEC data are redundantly transmitted for error correction. If an error occurs, it is corrected using the FEC data. In comparison with the foregoing ARQ technique, the FEC technique can decrease delay time because data are not retransmitted. However, since redundant data are added, if a transmission path has a small packet loss, the throughput will decrease. In addition, since the FEC technique causes the reception terminal device side to perform complicated error detection and encoding processes, the medium quality depends on the processing performance of the reception terminal device side. Thus, since it is difficult to simply decide optimum additional FEC data according to the network situation and reception terminal device, the FEC technique is involved in a problem of overhead of processing time.

The foregoing techniques are examples of packet loss countermeasures and error countermeasures. In addition, a technique of preventing network congestion that causes packet losses is also known. In addition, as techniques of transferring packets without error countermeasures, a technique of controlling transfer rates and a technique of controlling frame rates of moving images are known. In other words, when the transmission terminal device side transfers a moving image, if the network situation deteriorates, the transmission terminal device side transmits a moving image at a lower rate than the regular transfer rate so as to reduce chances in which packet losses and packet delays occur. In the streaming systems, these error countermeasures and rate controls are used alone or in combinations.

For example, Japanese Patent Application Laid-Open Publication No. 2005-136548, referred to as Patent Document 1, discloses a technique of obtaining a transmission state of a communication network, causing the transmission rate of transmission packets to be increased, decreased, or maintained based on the transmission state, and causing retransmission packets to be retransmitted when a retransmission request is issued.

### SUMMARY OF THE INVENTION

Various respective aspects and features of the invention are defined in the appended claims. Combinations of features from the dependent claims may be combined with features of the independent claims as appropriate and not merely as explicitly set out in the claims.

The rate control described in Patent Document 1 can be performed advantageously by controlling only the transmission side (server). However, when the transmission rate at which multimedia data such as a moving image are transmitted decreased, the reproduction quality will deteriorate. Although there are many algorithms that improve the quality of moving images, there are a few techniques of improving resolution and image quality. In addition, these techniques are intended for storage type media such as disc media and do not dynamically change resolutions and image qualities depending on the environment of the network and the calculation performance of the reception terminal device.

In view of the foregoing, it would be desirable to provide a transmission apparatus, a transmission method, and a reception apparatus that control resolutions of image data to be transmitted depending on whether a network situation is good or bad and on the level of a load imposed on a processing device that performs upscaling in a reception terminal device.

According to an embodiment of the present invention, there is provided a transmission apparatus including a buffer memory, a transmission section, a communication section, and a control section. The buffer memory stores first image data and second image data as image data to be transmitted. The second image data have a resolution higher than that of the first image data. The transmission section transmits either the first image data or the second image data as streaming data. The communication section receives from a reception terminal device a control message representing a network situation and a level of a load imposed on a processing device which performs upscaling in the reception terminal device. The control section transmits the first image data when the control message denotes that the network situation is bad, transmits either the first image data or the second image data when the control message denotes that the network situation is good, and controls the reception terminal device not to perform the upscaling when the control message denotes that the network situation is good and the level of the load imposed on the processing device is high.

The control section preferably controls the reception terminal device to perform a process of not changing a resolution of the received image data or a process of performing the upscaling when the control message denotes that the network situation is good and the level of the load imposed on the processing device is low.

A reply to the control message preferably contains information that designates a process performed by the reception terminal device.

It is preferred that a plurality of upscaling algorithms are provided and the level of the load imposed on the processing device is changed depending on which of the algorithms is used.

According to an embodiment of the present invention, there is provided a transmission method. First image data and second image data as image data to be transmitted are stored. The second image data have a resolution higher than that of the first image data. Either the first image data or the second image data as streaming data are transmitted. A control message representing a network situation and a level of a load imposed on a processing device which performs upscaling in the reception terminal device is received from a reception terminal device. The first image data are transmitted when the control message denotes that the network situation is bad. Either the first image data or the second image data are transmitted when the control message denotes that the network situation is good. The reception terminal device is controlled not to perform the upscaling when the control message denotes that the network situation is good and the level of the load imposed on the processing device is high.

According to an embodiment of the present invention, there is provided a reception apparatus including a buffer memory, a monitor, and a control section. The buffer memory receives either first image data or second image data as streaming data, the second image data having a resolution higher than that of the first image data. The monitor monitors a level of a load imposed on a processing device which performs upscaling from the first image data to the second image data. The control section causes the upscaling not to be performed when the first image data are received and the level of the load imposed on the processing device is high.

According to an embodiment of the present invention, the problem of the foregoing related art can be solved by decreasing the resolution of an image to be transmitted and thereby decreasing the bit rate in a real-time delivery or a streaming delivery depending on a network situation, data can be smoothly transferred. In addition, by upscaling a received moving image, the image can be reproduced in a high quality.

According to an embodiment of the present invention, by estimating a resolution of a moving image that can be reproduced according to the level of a load imposed on a processing device that performs upscaling in a reproduction device, the moving image can be stably reproduced and serviced in the maximum quality of the reproduction apparatus.

According to an embodiment of the present invention, the reception side measures a network situation, estimates an available resolution based on the measured network situation, and informs a transmission terminal device so as to flexibly deal with a network that does not assure Quality Of Service (Qos).

These and other objects, features and advantages of the present invention will become more apparent in light of the following detailed description of a best mode embodiment thereof, as illustrated in the accompanying drawings.

### BRIEF DESCRIPTION OF THE DRAWINGS

Embodiments of the invention will now be described with reference to the accompanying drawings, throughout which like parts are referred to by like references, and in which:
Fig. 1 is a block diagram showing a communication system according to an embodiment of the present invention;
Fig. 2 is a functional block diagram showing the communication system according to an embodiment of the present invention;
Fig. 3 is a flow chart showing a flow of an operation of a transmission apparatus according to an embodiment of the present invention;
Fig. 4 is a flow chart showing a flow of an operation of a reception terminal device according to an embodiment of the present invention; and
Fig. 5 is a schematic diagram showing an example of controlling of the transmission apparatus according to an embodiment of the present invention.

### DETAILED DESCRIPTION OF THE PREFERRED EMBODIMENTS

Next, with reference to the accompanying drawings, embodiments of the present invention will be described. Although these embodiments that will be described in the following are preferred ones of the present invention and various technically preferably limitations are imposed thereto, it is appreciated that the scope of the present invention is not limited to these embodiments unless described that they impose limitations to the present invention.

According to an embodiment of the present invention, a streaming transmission system is used. In this system, a reception apparatus receives data from a transmission apparatus and reproduces image or sound based on the received data. In the streaming transmission system, data transmitted from the transmission apparatus are generally referred to as streaming data. More specifically, an MPEG stream generated by applying the Moving Picture Experts Group (MPEG) encoding process for image data is placed in Internet Protocol (IP) packets. The IP packets are transmitted through the Internet.

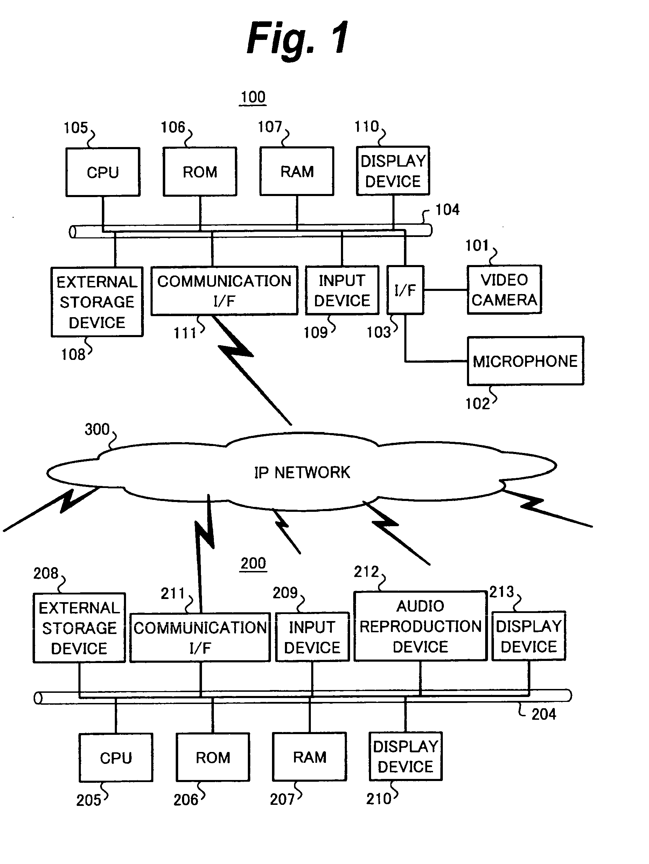

An embodiment of the present invention has a system structure shown in Fig. 1. In other words, a plurality of reception terminal devices 200 are connected to a transmission apparatus 100 through a communication network, for example, an IP network 300. The IP network 300 is a network that uses IP (Internet, wired local area network (LAN), a wireless LAN, or the like). The transmission apparatus 100 functions as a server and the reception terminal device 200 functions as a client. The reception terminal devices 200 include a personal computer, a personal digital assistance (PDA), a mobile phone, and so forth. Such a communication system communicates data as packets between the transmission apparatus 100 and the reception terminal devices 200. The reception terminal device 200 successively reproduces received packets (streaming reproduction).

The transmission apparatus 100 inputs video data and audio data (hereinafter these types of content data are generally referred to as media data, however, video data and audio data that have been compression-encoded are also referred to as media data unless they are necessary to be distinguished) obtained by a recorder-integrated video camera 101 and a microphone 102 to a bus 104 through an interface 103. The media data are transmitted as streaming data to the reception terminal device 200 through the IP network 300. The streaming data are data that are streamingly reproduced and successively transmitted or received as time passes.

Connected to the bus 104 are a Central Processing Unit (CPU) 105, a Read Only Memory (ROM) 106, a Random Access Memory (RAM) 107, and an external storage device 108. The CPU 105 executes various types of processes according to programs recorded in the ROM 106 or the external storage device 108. The RAM 107 stores programs and data such that the CPU 105 executes the programs with the data.

Connected to the bus 104 in the transmission apparatus 100 are also an input device 109, composed of a keyboard, a mouse, switches, and so forth, a display device 110 as a monitor, and a communication interface 111. The CPU 105 executes various types of processes according to commands that are input from the input device 109. The external storage device 108 is composed, for example, of a hard disk and records programs and various types of data such that the CPU 105 executes programs with the data. For example, media data to be transmitted are stored in the external storage device 108 in advance. The communication interface 111 communicates with the reception terminal device 200 through the IP network 300.

Like those connected to the transmission apparatus 100, connected to the reception terminal device 200 through a bus 204 are a CPU 205, a ROM 206, a RAM 207, an external storage device 208, an input device 209, a display device 210 as a monitor, and a communication interface 211. The reception terminal device 200 communicates with the transmission apparatus 100 through the communication interface 211 and the IP network 300. In addition, the reception terminal device 200 includes an audio reproduction device 212 that reproduces media data, for example, audio data and a display device 213 that reproduces video data.

In the system shown in Fig. 1, the transmission apparatus 100 stores media data obtained by the video camera 101 and the microphone 102 to the RAM 107 through the interface 103. Media data may be stored in the RAM 107 in advance. The media data are converted into streaming data by a process of the CPU 105 and the streaming data are transferred to the IP network 300 through the communication interface 111. In this case, as will be described later, the resolution of media data (image data) that are transmitted is controlled depending on whether the network environment is good or bad and on the level of a load of the process imposed on the reception terminal device 200. For example, either high resolution (definition) (hereinafter abbreviated as HD) image data or standard resolution (definition) (hereinafter abbreviated as SD) image data are transmitted.

An SD image is an image composed, for example, of 460 x 480 pixels (number of horizontal pixels x number of vertical pixels) (video graphics array (VGA)). On the other hand, an HD image is an image composed, for example, of 1080i, 720p, 1080p, or the like. An HD image is represented by (number of scanning lines, progressive (p) or interlace (i)). For example, 1080p denotes that the scanning system is progressive and that the number of horizontal scanning lines by the number of vertical scanning lines are 1920 x 1080. Besides the foregoing formats of HD images, other formats including Extended Graphics Array (XGA) format, 1024 x 768 pixels, are known. According to an embodiment of the present invention, any one of the foregoing format HD images can be used.

The reception terminal device 200 receives streaming data transmitted from the transmission apparatus 100 through the communication interface 211 and stores the received streaming data in the RAM 207 as a buffer memory. The CPU 205 performs a reproduction process. The display device 213 displays an image and the audio reproduction device 212 reproduces sound.

When received media data that the reception terminal device 200 has received are SD image data, it can not only reproduce the SD image data, but upscale the SD image data into HD image data. As described above, there are a plurality of HD image formats. The reception terminal device 200 can upscale an SD image into an HD image according to one of several HD image formats or an SD image into an HD image according to another HD image format with an aspect ratio of for example, 4:3. An SD image can be upscaled into an HD image by an image processing method accomplished by a plurality of CPUs and implemented in "PLAYSTATION 3" (registered trademark of Sony Corporation).

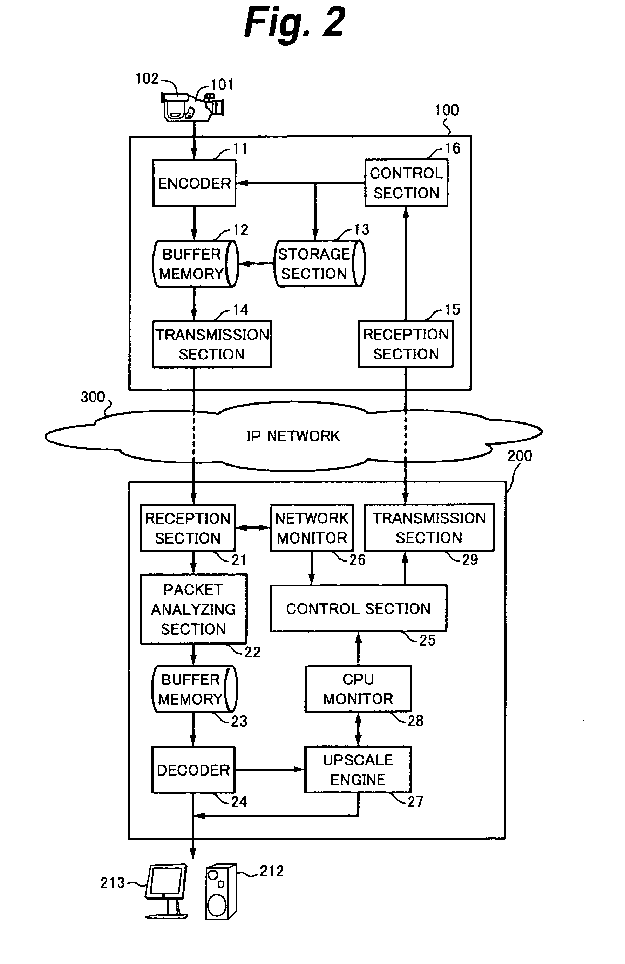

Fig. 2 is a functional block diagram showing a system structure according to an embodiment of the present invention. In the transmission apparatus 100, an encoder 11 compression-encodes media data obtained by the recorder-integrated video camera 101 and the microphone 102, the encoder 11 is accomplished by software processes of the CPU 105, the ROM 106, and the RAM 107 shown in Fig. 1. The video data are compressed according to Moving Picture Experts Group Phase 2 (MPEG2), Advanced Video Coding (AVC) (H.246), MPEG4, or the like whereas the audio data are compressed according to Advanced Audio Coding (AAA), MPEG audio, or the like.

The video camera 101 and the microphone 102 supply media data obtained in real time to the encoder 11 of the transmission apparatus 100. Encoded data that are output from the encoder 11 are stored to a buffer memory 12 (corresponding to the RAM 107 shown in Fig. 1). Instead of real time data, compressed media data stored in a storage section (such as a hard disk, a disc recording and reproducing section, or the like corresponding to an external storage device 108 shown in Fig. 1) may be transmitted. Reproduction data stored in the storage section 13 are supplied to the buffer memory 12.

The media data stored in the buffer memory 12 are supplied to a transmission section 14 (corresponding to the communication interface 111 shown in Fig. 1). The transmission section 14 generates streaming data that are a series of packets. The streaming data are transmitted from the transmission section 14 to the IP network 300. The transmission section 14 has a mechanism that transmits media data obtained in real time or those stored in the storage section 13 as streaming data. Generally, the transmission section 14 starts transmission of streaming data according to a request issued from a reception terminal. Instead, the transmission side may transmit streaming data to many reception terminal devices (so-called multi-casting).

In addition, the transmission apparatus 100 has a reception section 15 (corresponding to the communication interface 111 shown in Fig. 1). The reception section 15 receives information denoting whether the network environment is good or bad and information representing the level of a load imposed on the CPU that composes the upscale processing section of the reception terminal device 200 (called a control message) from the reception terminal device 200 through the IP network 300. A control message received by the reception section 15 is supplied to a control section 16 (corresponding to the CPU 105 shown in Fig. 1). The control section 16 controls the encoder 11 and the storage section 13 according to the control message so as to change the resolution of a moving image as the transmitted streaming data.

For example, the control section 16 controls the compression ratio of the encoder 11. One of an SD image and an HD image is output from the encoder 11. When an HD image is stored in the storage section 13 and the control section 16 causes the storage section 13 to output an SD image, the storage section 13 outputs an SD image into which an HD image is downscaled. Instead, the storage section 13 may store SD image quality content in advance.

A reception section 21 of the reception terminal device 200 (corresponding to the communication interface 211 shown in Fig. 1) receives streaming data from the transmission apparatus 100 through the IP network 300. The reception section 21 converts the streaming data into media data. The media data are supplied to a packet analyzing section 22 (corresponding to the CPU 205 and the RAM 207 shown in Fig. 1). The packet analyzing section 22 analyzes the degree of a packet loss and so forth. The received media data are stored to a buffer memory 23 (corresponding to the RAM 207 shown in Fig. 1).

The media data are supplied from the buffer memory 23 to a decoder 24. The decoder 24 decompresses the media data. The decoder 24 is accomplished by software processes performed by the CPU 205, the ROM 206, and the RAM 207 shown in Fig. 1. The media data supplied from the decoder 24 are reproduced by the display device 213 and the audio reproduction device 212 connected to the reception terminal device 200. The upscale engine 27 is disposed in connection with the decoder 24. The upscale engine 27 upscales an image by software processes of the CPU, ROM, and RAM.

The upscale engine 27 performs a software process of converting a low resolution image, for example an SD image, into a high resolution image, for example an HD image. The upscale engine 27 performs the upscale process depending on the level of a load imposed on the CPU of the reception terminal device 200, user's designation, and so forth. A CPU monitor 28 that monitors the level of a load imposed on the CPU that composes the upscale engine 27 is disposed. The CPU monitor 28 monitors the level of a load imposed on the CPU that composes the upscale engine 27 and supplies information that represents the level of the load to a control section 25. The CPU monitor 28 measures the calculation load amount of the CPU, namely the calculation load ratio of the CPU. For example, if there are a plurality of upscale techniques, the level of the load imposed on the CPU depends on the upscale technique for use. If the upscale engine 27 is composed of a plurality of CPUs, the number of CPUs may be detected as the level of the load imposed thereon.

In addition, a network monitor 26 is disposed in connection with the reception section 21 of the reception terminal device 200. The network monitor 26 monitors a packet loss, a jitter, and so forth to determine whether the network environment is good or bad. The network monitor 26 grasps the network environment according to a packet loss and a delay state of received data and supplies information that represents the network environment to the control section 25. The control section 25 transmits a request as a control message to the transmission apparatus 100 through a transmission section 29 to cause the transmission apparatus 100 to change the bit rate according to the network environment. If the network environment is bad, a process of decreasing the bit rate (transmitting for example an SD image) is performed. If the network environment is good, a process of increasing the bit rate (for example, transmitting an HD image) is performed.

The control section 25 receives information denoting whether the network environment is good or bad from the network monitor 26 and information representing the level of the load imposed on the CPU from the upscale engine 27 and generates a control message according to these information. The generated control message is transmitted from the transmission section 29 to the reception section 15 of the transmission apparatus 100 through the IP network 300.

The control section 25 transmits the control message to the transmission apparatus 100 to request it to transmit low resolution data that the reception terminal device 200 supposes that it can normally receive. As a result, the amount of transmission data can be decreased and data can be delivered to the reception terminal without a loss. If the level of the calculation load imposed on the reception terminal device side is low, a low resolution SD image can be upscaled to generate a high resolution HD image. In contrast, if the level of the calculation load is high, it is determined that a low resolution SD image be difficult to be upscaled and the low resolution SD image is reproduced without upscaling. Instead, a low resolution SD image is upscaled according to an algorithm whose calculation amount is relatively small. Timing at which upscaling is performed can be freely designated by the reception terminal device. For example, upscaling may be performed when the reception terminal device 200 receives a reply ACK to a control message.

A control message that the reception terminal device 200 transmits to the transmission apparatus 100 contains for example the following information.
1) With respect to network situation:
   - Packet loss rate
   - Jitter
   - Link speed
2) CPU calculation load
   - CPU load rate (%)
   - Determination whether or not upscaling can be performed

While data are being transmitted or received, a control message is periodically transmitted. For example, monitored results are transmitted at intervals, for example, of 10 seconds. Instead, only when data are initially transmitted, a control message may be transmitted. When the transmission apparatus 100 has correctly received a control message, the transmission apparatus 100 transmits a reception response (ACK) to the reception terminal device 200.

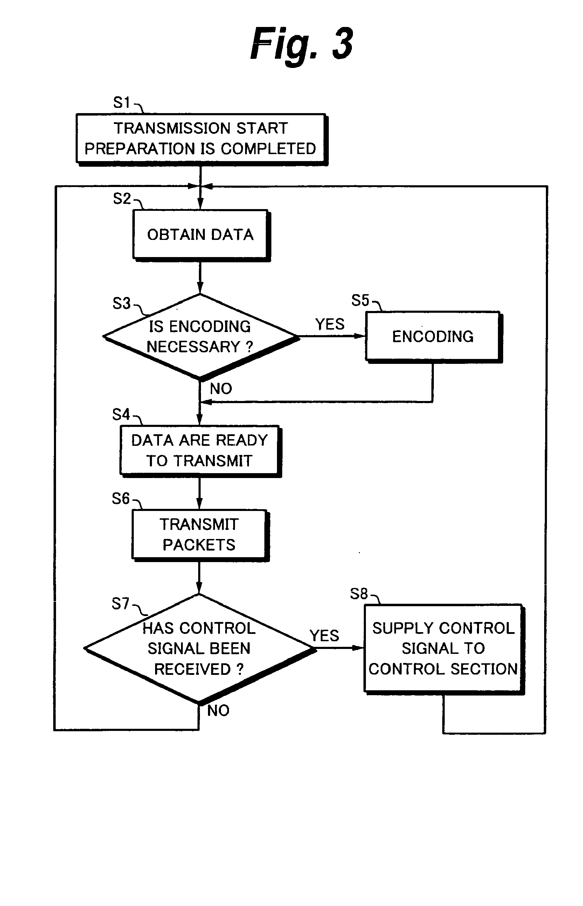

Fig. 3 shows a flow of an operation of the transmission apparatus 100. At step S1, transmission start preparation is completed. At step S2, media data to be transmitted are obtained. Data are obtained from the video camera 101 in real time or from the storage section 13.

At step S3, it is determined whether or not to cause the encoder 11 to encode data. This encoding means a process of converting an HD resolution into an SD resolution. As will be described later, the transmission apparatus 100 designates the resolution of media data to be transmitted according to the substance of the control message. When the determined result denotes that encoding is not necessary, the flow advances to step S4. At step S4, data are ready to transmit. When the determined result denotes that encoding is necessary, the flow advances to step S5. At step S5, encoding is performed (convert an HD resolution into an SD resolution). When media data to be transmitted are data captured from the video camera 101, the determined result denotes that compression-encoding is necessary. When media data to be transmitted are data stored in the storage section 13, the determined result denotes that encoding is not necessary.

When data are ready to transmit (at step S4), the media data are stored to the buffer memory 12 and placed in packets. At step S6, streaming data composed of packets are transmitted.

At step S7, it is determined whether or not a control message has been received. When a control message has not been received, the flow returns to step S2 (obtain data). When a control message has been received, the flow advances to step S8. At step S8, the received control message is supplied to the control section 16 and then a reply ACK is sent back. Thereafter, the flow returns to step S2 (obtain data). The control message contains information that denotes whether the level of the load imposed on the CPU that composes the upscale engine of the reception terminal device 200 is high or low and information that denotes whether the network environment is good or bad.

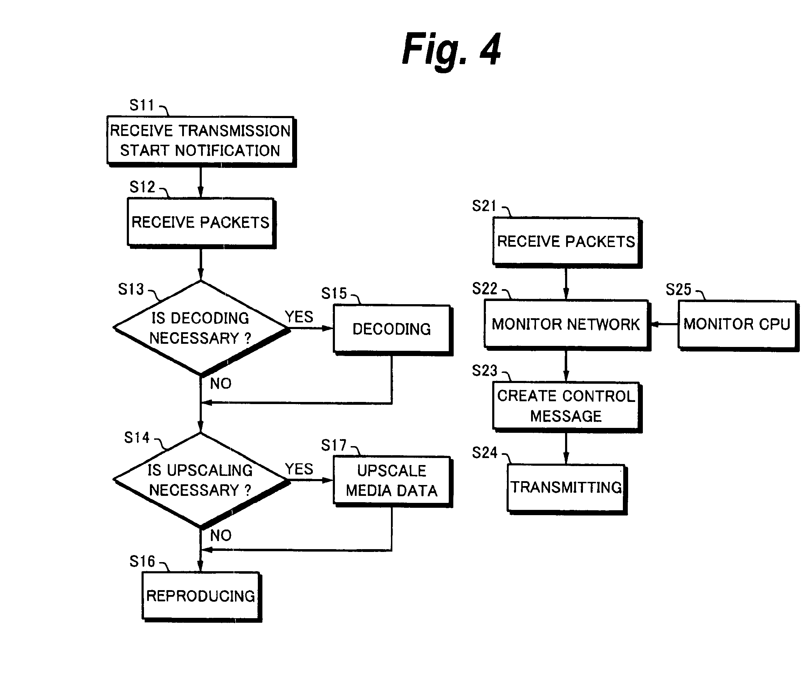

Fig. 4 shows a flow of an operation of the reception terminal device 200. At step S11, a transmission start notification is received from the transmission apparatus 100. At step S12, packets are received.

At step S13, it is determined whether or not decompression-decoding is necessary. When the determined result denotes that decoding is not necessary, the flow advances to step S14. At step S14, it is determined whether or not upscaling is necessary. When the determined result at step S13 denotes that decoding is necessary, the flow advances to step S15. At step S15, the decoding process is performed.

When the determined result at step S14 denotes that upscaling is not necessary, the flow advances to step S16. At step S16, media data that have been received are reproduced. When the determined result at step S14 denotes that upscaling is necessary, the flow advances to step S17. At step S17, upscaling is performed. In other words, an SD image is converted into an HD image. At step S16, the HD image that has been upscaled is reproduced.

It is determined whether or not upscaling is performed based on a command received from the transmission apparatus 100 or the level of the load imposed on the CPU of the reception terminal device 200. For example, when the level of the load imposed on the CPU is high, even if upscaling is necessary, upscaling is not performed. In this case, it is determined that upscaling be not necessary. In addition, when the user has not designated upscaling, it is determined that upscaling be not necessary.

When the reception terminal device 200 has received packets at step S21, information that represents the network situation environment is obtained by the network monitor 26 at step S22 and information that represents the level of the load imposed on the CPU of the upscale engine 27 is obtained by the CPU monitor 28 at step S25. At step S23, a control message containing the information that represents the situation of the network environment and information that represents the level of the load imposed on the CPU is created. At step S24, the control message is transmitted from the transmission section 29 to the transmission apparatus 100.

Next, an embodiment of the present invention will be described. The control section 16 of the transmission apparatus 100 changes the resolution of a moving image to be transmitted based on the control message transmitted from the reception terminal device 200. The reception terminal device 200 obtains the resolution of the received moving image and upscales the moving image based on the level of the load imposed on the CPU, detected by the CPU monitor 28. When necessary, the reception terminal device 200 does not upscale the moving image. In addition, since the level of the load of the calculation process differs in each of algorithms, they are also changed.

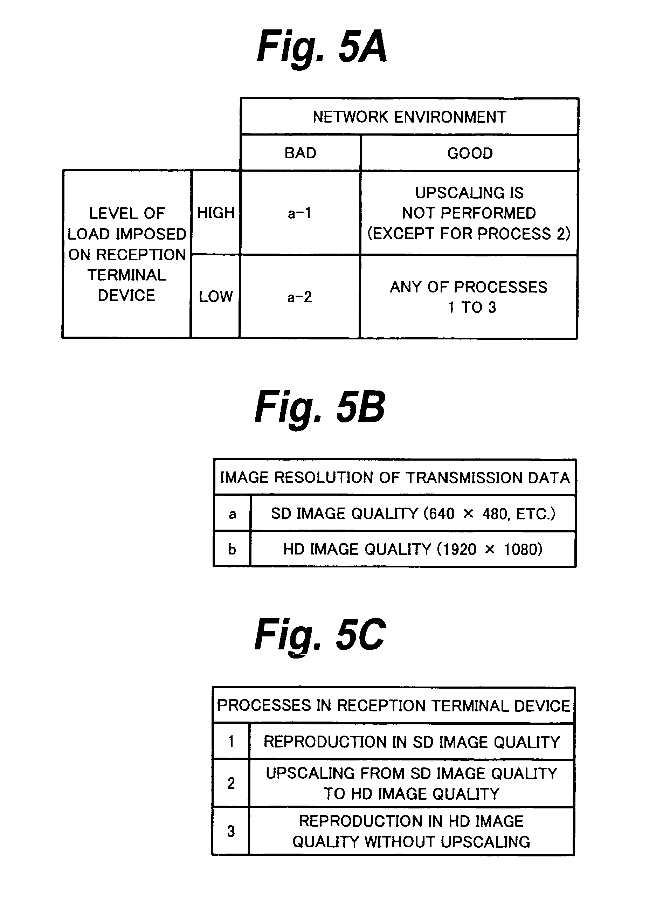

An example of these processes is listed in a control table shown in Fig. 5. In this example, resolutions are categorized as two levels of SD and HD. Instead, resolutions may be categorized as more fine levels. In addition, the network situation may be categorized as more fine states.

Instead, the transmission apparatus 100 may not designate a process that the reception terminal device 200 performs. In other words, the reception terminal device side may dynamically determine whether or not upscaling is necessary according to the network environment and upscale a moving image even if the transmission side does not change resolutions.

In the example shown in Fig. 5A to Fig. 5C, as shown in Fig. 5A, a process is performed based on information contained in the control message received from the reception terminal device 200, the information denoting whether the network environment is good or bad and denoting whether the level of the load imposed on the CPU of the reception terminal device is high or low. "a" in Fig. 5A denotes that the image resolution of transmission data is SD as shown in Fig. 5B. "b" in Fig. 5B denotes that the image resolution of transmission data is HD as shown in Fig. 5B. "1" in Fig. 5A denotes that the reception terminal device reproduces data in an SD image quality as shown in Fig. 5C. "2" in Fig. 5A denotes that the reception terminal device upscales an SD image quality to an HD image quality as shown in Fig. 5C. "3" in Fig. 5A denotes that the reception terminal device reproduces data in an HD image quality as shown in Fig. 5C.

Next, individual processes in the table shown in Fig. 5A will be described.

If the network environment is bad and the level of the load imposed on the reception terminal is high: a-1 (An SD image is transmitted. The reception terminal device reproduces the SD image in the SD image quality).

If the network environment is bad and the level of the load imposed on the reception terminal device is low: a-2 (An SD image is transmitted. The reception terminal device upscales the SD image to an HD image).

If the network environment is good and the level of the load imposed on the reception terminal device is high: when an SD image is transmitted, upscaling is not performed. It is preferred that the transmission apparatus transmit an HD image to the reception terminal device and it reproduce the HD image in the HD image quality. (However, if media data are an SD image or the network environment is not suitable to transmit an HD image, an SD image may be transmitted to the reception terminal device and it may reproduce the SD image.)

If the network environment is good and the level of the load imposed on the reception terminal device is low: the reception terminal device can perform one of the three processes. It is preferred that the transmission apparatus transmits an HD image and the reception terminal device reproduces the HD image. However, if the network environment is restricted and the media data are an SD image, the reception terminal device upscales the SD image to an HD image. In addition, when the user has designated an SD image quality, the transmission apparatus transmits an SD image.

Next, an example of control processes of the transmission apparatus 100 and the reception terminal device 200 will be described. It is assumed that while HD resolution data are being transmitted and received, the network environment is getting worse. In this case, the control processes are performed in the following order.
1) The transmission apparatus 100 transmits HD resolution data to the reception terminal device 200.
2) The reception terminal device 200 decodes the HD resolution data and reproduces the decoded data.
3) The reception terminal device 200 detects that the network condition is getting worse and transmits a control message to the transmission apparatus 100. At this point, a control message that denotes that for example "packet loss rate 5%, CPU load rate 30 %" is transmitted.
4) The transmission apparatus 100 receives the control message and changes the HD resolution of the transmission data to the SD resolution.
5) The transmission apparatus 100 transmits a reply ACK denoting that the transmission apparatus 100 has changed the resolution corresponding to the control message to the reception terminal device 200.
6) When the reception terminal device 200 receives the reply ACK corresponding to the control message from the transmission apparatus 100, if the CPU load rate is 30 %, the reception terminal device 200 determines that upscaling be able to be performed, upscales the SD resolution data, and reproduces the upscaled data.
7) While the foregoing processes are being performed, if the network condition is getting better, the transmission apparatus 100 transmits data in the original HD resolution to the reception terminal device 200.

It should be understood by those skilled in the art that various modifications, combinations, subcombinations and alternations may occur depending on design requirements and other factors insofar as they are within the scope of the appended claims or the equivalents thereof. For example, the transmission apparatus may relay streaming data received from another server or the like to the reception terminal device. Instead, the transmission apparatus may upscale low resolution image data received by the reception terminal device and transmit the upscaled image data to another reception terminal device. In addition, according to this embodiment of the present invention, qualities in a low-bit rate moving image delivery service can be differentiated depending on whether or not upscaling is performed and by selecting an algorithm. Thus, a business model that differentiates services based on fees can be established.

## Claims

1. A transmission apparatus, comprising:
a buffer memory which stores first image data and second image data as image data to be transmitted, the second image data having a resolution higher than that of the first image data;
a transmission section which transmits either the first image data or the second image data as streaming data;
a communication section which receives from a reception terminal device a control message representing a network situation and a level of a load imposed on a processing device which performs upscaling in the reception terminal device; and
a control section which transmits the first image data when the control message denotes that the network situation is bad, transmits either the first image data or the second image data when the control message denotes that the network situation is good, and controls the reception terminal device not to perform the upscaling when the control message denotes that the network situation is good and the level of the load imposed on the processing device is high.

2. The transmission apparatus as set forth in claim 1,
wherein the control section controls the reception terminal device to perform a process of not changing a resolution of the received image data or a process of performing the upscaling when the control message denotes that the network situation is good and the level of the load imposed on the processing device is low.

3. The transmission apparatus as set forth in claim 1,
wherein a reply to the control message contains information that designates a process performed by the reception terminal device.

4. The transmission apparatus as set forth in claim 1,
wherein a plurality of upscaling algorithms are provided and the level of the load imposed on the processing device is changed depending on which of the algorithms is used.

5. A transmission method, comprising the steps of:
storing first image data and second image data as image data to be transmitted, the second image data having a resolution higher than that of the first image data and transmitting either the first image data or the second image data as streaming data;
receiving from a reception terminal device a control message representing a network situation and a level of a load imposed on a processing device which performs upscaling in the reception terminal device; and
transmitting the first image data when the control message denotes that the network situation is bad, transmitting either the first image data or the second image data when the control message denotes that the network situation is good, and controlling the reception terminal device not to perform the upscaling when the control message denotes that the network situation is good and the level of the load imposed on the processing device is high.

6. A reception apparatus, comprising:
a buffer memory which receives either first image data or second image data as streaming data, the second image data having a resolution higher than that of the first image data;
a monitor which monitors a level of a load imposed on a processing device which performs upscaling from the first image data to the second image data; and
a control section which causes the upscaling not to be performed when the first image data are received and the level of the load imposed on the processing device is high.
